# EUROPÄISCHE PATENTSCHRIFT

(11) **EP 3 743 190 B1**
(45) Veröffentlichungstag und Bekanntmachung des Hinweises auf die Patenterteilung: **22.06.2022**
(21) Anmeldenummer: 19700335.3
(22) Anmeldetag: 04.01.2019
(51) Int. Cl.: B01D 46/00, B01D 46/24, B01D 50/00

(54) **FILTERELEMENT, INSBESONDERE ZUR GASFILTRATION**
FILTER ELEMENT, IN PARTICULAR FOR GAS FILTRATION
ÉLÉMENT FILTRANT, EN PARTICULIER POUR LA FILTRATION DE GAZ

(30) Priorität: 24.01.2018 DE 102018000540
(43) Veröffentlichungstag der Anmeldung: 02.12.2020
(73) Patentinhaber: MANN+HUMMEL GmbH, 71636 Ludwigsburg (DE)
(72) Erfinder: RIEGER, Mario, 71638 Ludwigsburg (DE); PEREIRA MADEIRA, Pedro Miguel, 74321 Bietigheim-Bissingen (DE); KUNZE, Stefan, 72076 Tübingen (DE); DEHNEN, Ulrich, 70806 Kornwestheim (DE); STÜRNER, Johannes, 1018 AC Amsterdam (NL); BEYLICH, Markus, 71636 Ludwigsburg (DE)
(74) Vertreter: Mann + Hummel Intellectual Property
(86) Internationale Anmeldenummer: PCT/EP2019/050170
(87) Internationale Veröffentlichungsnummer: WO 2019/145134

(56) Entgegenhaltungen:
- EP-A1- 1 849 555
- DE-A1-102016 003 456
- DE-U1-202015 101 003
- US-B1- 7 001 440

## Beschreibung

### Technisches Gebiet

Die Erfindung bezieht sich auf eine Filtereinrichtung zur Filtration der einer Brennkraftmaschine zuzuführenden Verbrennungsluft, mit einem Filterelement mit einem ringförmigen Filtermediumkörper und einer Endscheibe an mindestens einer Stirnseite des Filtermediumkörpers.

### Stand der Technik

Aus US 7 001 440 B1 ist ein Luftfilterelement mit schrägen Finnen bekannt und aus DE 10 2016 003456 A1 eine Filteraufnahme mit einem Filterelement mit einem ovalen Querschnitt. In US 3,816,982 wird ein Luftfilter mit einem hohlzylindrischen Filterelement in einem aufnehmenden Filtergehäuse beschrieben. Die zu filtrierende Luft wird über eine seitlich im Filtergehäuse angeordnete Einströmöffnung eingeleitet, die dem Filterelement axial vorgelagert ist, und durchströmt anschließend das Filterelement radial von außen nach innen. Das Filterelement weist an seinen gegenüberliegenden Stirnseiten eine offene und eine geschlossene Endscheibe auf. Die gereinigte Luft wird axial aus dem Innenraum des hohlzylindrischen Filterelements über die offene Endscheibe abgeleitet.

In DE 10 2013 015 052 A1 wird eine Filtereinrichtung zur Reinigung eines Gasstroms beschrieben, die ein hohlzylindrisches Filterelement und einen ebenfalls hohlzylindrischen Vorabscheider umfasst, der das Filterelement umgreift und an dessen Außenseite über den Umfang verteilt Leitschaufeln angeordnet sind. Der zugeführte Gasstrom erfährt an den Leitschaufeln eine Umlenkung und Beschleunigung, was zur Abscheidung von groben Verunreinigungen wie Schmutz und Staubpartikeln führt.

DE 10 2010 049 411 A1 offenbart betrifft ein Filterelement für ein Lufteinlasssystem mit einem Filtermediumkörper zum Reinigen von Rohluft. Der Filtermediumkörper ist als Hohlkörper mit langgestreckter Querschnittsform ausgebildet und weist an seinen axialen Stirnseiten Endscheiben auf. Entlang einer Schmalseite des Filtermediumkörpers sind axial verteilt Leitschaufeln angeordnet, die zur Strömungsführung im Anströmbereich dienen.

### Offenbarung der Erfindung

Der Erfindung liegt die Aufgabe zugrunde, eine Filtereinrichtung mit einem Filterelement mit einem ringförmigen Filtermediumkörper mit einfachen konstruktiven Maßnahmen in der Weise auszubilden, dass Schmutzpartikel aus dem zu filtrierenden Fluidstrom noch vor der Durchströmung des Filtermediumkörpers abgeschieden werden.

Diese Aufgabe wird erfindungsgemäß mit den Merkmalen des Anspruchs 1 gelöst. Die Unteransprüche geben zweckmäßige Weiterbildungen an.

Erfindungsgemäß weist das Filterelement einen ringförmigen Filtermediumkörper auf, an dem die Filtration eines zu reinigenden Fluids stattfindet. Das Filterelement wird insbesondere zur Gasfiltration verwendet, beispielsweise zur Filtration der einer Brennkraftmaschine zuzuführenden Verbrennungsluft.

Der ringförmige Filtermediumkörper des Filterelements wird in Radialrichtung von dem zu reinigenden Fluid durchströmt, insbesondere radial von außen nach innen, so dass die Außenseite des Filtermediumkörpers die Anström- bzw. Rohseite und die innenliegende Seite die Reinseite bildet. Grundsätzlich kommt auch eine umgekehrte Durchströmung des Filtermediumkörpers radial von innen nach außen in Betracht. Der Filtermediumkörper ist insbesondere ringförmig geschlossen ausgebildet und weist einen innenliegenden Strömungsraum für das Fluids auf.

Eine Stirnseite des insbesondere ringförmig geschlossenen Filtermediumkörpers ist mit einer geschlossenen Endscheibe versehen, die den innenliegenden Strömungsraum an dieser Stelle axial verschließt. An der axial gegenüberliegenden Stirnseite - bezogen auf die Längsachse von Filterelement und Filtermediumkörper - ist am Filtermediumkörper bevorzugt eine offene Endscheibe angeordnet, die eine zentrale Ausnehmung aufweist, über die Fluid aus dem innenliegenden Strömungsraum des Filtermediumkörpers abgeleitet bzw. in diesen hineingeleitet werden kann. Benachbart zu einer Endscheibe an einer Stirnseite des Filtermediumkörpers sind mehrere Leitschaufeln angeordnet, die sich radial zur Längsachse des Filterelements über die Außenkontur der Endscheibe hinaus erstrecken und in einen Strömungsweg hineinragen, der der Anströmseite des Filtermediumkörpers vorgelagert ist.

Die Leitschaufeln befinden sich erfindungsgemäß benachbart zu der geschlossen ausgeführten Endscheibe am Filtermediumkörper. Zusätzlich oder alternativ ist es auch möglich, benachbart zu einer axial gegenüberliegenden, offenen Endscheibe Leitschaufeln anzuordnen. Über die offene Endscheibe kann Fluid aus dem innenliegenden Strömungsraum im Filtermediumkörper axial abgeleitet werden oder, bei einer radialen Durchströmung des Filtermediumkörpers von innen nach außen, in den innenliegenden Strömungsraum axial eingeleitet werden.

Die Leitschaufeln werden von dem Fluid angeströmt und beeinflussen die Fluidströmung. Diese wird insbesondere mit einem Drall versetzt, was die Abscheidung von in dem Fluid mitgeführten Schmutzpartikeln begünstigt. Die mit einem Drall versetzte Fluidströmung beginnt insbesondere in Umfangsrichtung zu zirkulieren, wodurch die mitgeführten Schmutzpartikel im Fluid nach außen getragen werden und sich an der Innenseite einer Gehäusewand absondern können. Bei dieser Gehäusewand handelt es sich insbesondere um die Außenwand eines das Filterelement aufnehmenden Filtergehäuses.

Es kommen verschiedene Ausführungen in Betracht, wie die Leitschaufeln bezogen auf die Endscheibe des Filtermediumkörpers angeordnet sind. Vorteilhafterweise sind die Leitschaufeln gleichmäßig über den Umfang der Endscheibe verteilt. Alternativ hierzu ist es auch möglich, eine nicht-gleichmäßige Verteilung der Leitschaufeln vorzusehen, indem beispielsweise ein Abschnitt entlang des Umfangs der Endscheibe frei von Leitschaufeln bleibt und entweder einen freien Strömungsquerschnitt an dieser Stelle bildet oder komplett verschlossen ist. Auf diese Weise kann zusätzlich Einfluss auf die der Anströmseite des Filtermediumkörpers zuzuführende Fluidströmung genommen werden.

Die Leitschaufeln sind an der Endscheibe am Filterelement befestigt, benachbart zu der sich die Leitschaufeln radial nach außen erstrecken. Es kann vorteilhaft sein, die Leitschaufeln so auszubilden, dass die freie Stirnseite der Leitschaufeln mit axialem Abstand zur Endscheibe liegt, beispielsweise in Richtung des Filtermediumkörpers axial zur Endscheibe versetzt oder in Gegenrichtung axial von der Endscheibe weiter entfernt ist und somit axial außerhalb des Filtermediumkörpers liegt. Erfindungsgemäß liegen die Leitschaufeln axial zumindest annähernd in gleicher Höhe wie die Endscheibe.

Der ringförmige Filtermediumkörper des Filterelements weist, gemäß einer weiteren vorteilhaften Ausführung, eine langgestreckte Querschnittsform auf. Der innenliegende Strömungsraum ist von Längs- und Schmalseiten des Filtermediumkörpers umschlossen. Die Querschnittsform des Filtermediumkörpers kann oval oder ovalisiert sein. Es kommen auch nicht-ovale, längsgestreckte Querschnittsformen in Betracht, beispielsweise konkav gekrümmte Längsseiten oder geradflächige, ebene Längsseiten oder nicht-oval gekrümmte, konvexe Längsseiten. Die Erstreckung der Längsseiten ist größer als die Erstreckung der Schmalseiten; es kann beispielsweise zweckmäßig sein, dass die Erstreckung der Längsseiten mindestens doppelt so groß ist wie die Erstreckung der Schmalseiten. Die Schmalseiten sind beispielsweise mit einer halbkreisförmigen Querschnittsform versehen.

Die langgestreckte Querschnittsform des Filtermediumkörpers bzw. des Filterelements hat den Vorteil, dass verhältnismäßig niedrig bauende Einbauräume genutzt werden können. Außerdem ist eine große Anströmfläche an den Längsseiten des Filtermediumkörpers gegeben, an der gleiche oder ähnliche Strömungsverhältnisse herrschen.

Alternativ zu einer längsgestreckten, ringförmigen Querschnittsform ist es auch möglich, dass der Filtermediumkörper eine kreisrunde Querschnittsform aufweist.

Das Filterelement und der Filtermediumkörper können über die axiale Länge - bezogen auf die Längsachse des Filterelements - eine nicht-konstante Querschnittsfläche aufweisen, die sich von einer Stirnseite zur gegenüberliegenden Stirnseite ändert. Beispielsweise wächst die Querschnittsfläche von der geschlossenen Endscheibe zur gegenüberliegenden, offenen Endscheibe an.

Alternativ zu einer nicht-konstanten Querschnittsfläche sind auch Filterelemente bzw. Filtermediumkörper mit über die Länge konstanter Querschnittsfläche möglich, zum Beispiel in Form eines Hohlzylinders mit kreisrundem oder nicht-rundem Querschnitt. Gemäß einer weiteren vorteilhaften Ausführung weisen eine oder mehrere Leitschaufeln einen gekrümmten Strömungsleitabschnitt auf. Der gekrümmte Strömungsleitabschnitt versetzt der auftreffenden Fluidströmung einen gewünschten Drall. Bei einer Ausführung des Filtermediumkörpers mit langgestreckter Querschnittsform befinden sich die Leitschaufeln mit dem gekrümmten Strömungsleitabschnitt vorteilhafterweise im Bereich der Schmalseite des Filtermediumkörpers.

Gemäß einer weiteren vorteilhaften Ausführung weisen eine oder mehrere Leitschaufeln einen geradlinigen oder zumindest annähernd geradlinigen Strömungsleitabschnitt auf. Dieser befindet sich, bei einer Ausführung des Filtermediumkörpers mit langgestreckter Querschnittsform, vorzugsweise an den Längsseiten des Filtermediumkörpers. Der geradlinige und zumindest annähernd geradlinige Strömungsleitabschnitt schließt sich insbesondere an einen Befestigungsabschnitt der Leitschaufel an, über den die Leitschaufel am Filterelement befestigt ist. Zwischen dem Strömungsleitabschnitt und dem Befestigungsabschnitt der Leitschaufel liegt vorzugsweise ein Winkel zwischen 10° und 80°, beispielsweise zwischen 30° und 60°.

Die Erfindung bezieht sich des Weiteren auf eine Filtereinrichtung mit einem vorbeschriebenen Filterelement und mit einem Filtergehäuse, in welchem das Filterelement aufgenommen ist. Die Leitschaufeln des Filterelements sind vorzugsweise in einem Strömungsdurchgang angeordnet, der zwischen einer Stirnseite des Filterelements und der Innenseite der Außenwand des aufnehmenden Filtergehäuses liegt.

In dem Filtergehäuse ist bevorzugt das Filterelement radial durchströmbare auswechselbar einbaubar. Dieses weist ferner wie erwähnt weiter bevorzugt eine langgestreckte, ovale, um die Längsachse angeordnete Querschnittsform auf. Ebenfalls bevorzugt weist das Filtergehäuseeinen ovalen, langgestreckten Querschnitt auf. Es kann aus einem Filtergrundgehäuse und einem vorgelagerten Einlassgehäuse insbesondere einstückig gebildet sein. Das Filtergrundgehäuse nimmt bevorzugt das Filterelement auf. Das Filtergrundgehäuse weist bevorzugt eine um die Längsachse herum angeordnete Außenwand mit bevorzugt ebenfalls ovaler, langgestreckter Querschnittsform auf. Weiter bevorzugt sind das Filterelement und das Filtergehäuse, insbesondere dessen Außenwand so ausgestaltet, dass über die axiale Länge des Filterelements der Abstand zwischen Innenseite der Außenwand und dem Filterelement, insbesondere der Außenseite des Filtermediumkörpers, umlaufend konstant ist, um die Umströmung möglichst widerstandsfrei zu machen. Die ovale Querschnittsform von Filterelement und Filtergehäuse weist bevorzugt zwei gegenüberliegende Schmalseiten mit starker Krümmung auf, die jeweils mit zwei gegenüberliegenden Längsseiten mit schwacher Krümmung oder gar geradem Verlauf miteinander verbunden sind. Bevorzugt sind Filterelement und/oder Außenwand des Filtergrundgehäuses im Wesentlichen achssymmetrisch zur Mittel- bzw. Längsachse ausgestaltet. Längen- zu Breitenverhältnisse der ovalen Querschnittsform des Filtergehäuses und/oder des Filterelements betragen bevorzugt mindestens 2:1, bevorzugt mindestens 3:1, insbesondere beim Filterelement optional mindestens 4:1.

Die Einströmöffnung und die Überströmöffnung im Einlassgehäuse sind über einen Einlasskanal miteinander verbunden. Der Einlasskanal kann innerhalb des Einlassgehäuses angeordnet sein oder, in einer bevorzugten Ausführung, der Einlasskanal wird von dem Einlassgehäuse gebildet. Die Querschnittsform des Einlasskanals ändert sich über seine Länge in der Weise, dass ein zwischen Einström- und Überströmöffnung liegender Kanalabschnitt eine Querschnittsform aufweist, die sich sowohl von der Querschnittsform der Einströmöffnung als auch von der Querschnittsform der Überströmöffnung unterscheidet. Die sich ändernde Querschnittsform des Einlasskanals hat den Vorteil, dass auf die Fluidströmung Einfluss genommen werden kann. So ist es insbesondere möglich, der Strömung einen Drall aufzuprägen, um eine rotative Vorabscheidung zu erzeugen, bevor die Strömung durch Filterelement tritt. In diesem Zusammenhang wird als Einlasskanal und dessen Querschnitt der Bereich vor dem Überströmen zum Filterelement bezeichnet, insbesondere vor dem Durchtreten durch die Überströmöffnung, die bevorzugt auf Höhe einer offenen oder geschlossenen Endscheibe angeordnet ist. Dabei wird im Folgenden ersichtlich, dass der effektive für den Ein- und Übertritt der Luft zum Filterelement bzw. den Übertritt in die rotierende Strömung zur Verfügung stehende Querschnitt teilweise durch den wie nachstehend beschrieben umlaufend sukzessiven Durchtritt der Luft durch die Überströmöffnung größer ist oder sein kann, als der stromauf der Überströmöffnung zur Verfügung stehende Querschnitt des Einlasskanals.

Der Einlasskanal besitzt beispielsweise einen düsenähnlichen Querschnittsverlauf, bei dem die Querschnittsform des zwischenliegenden Kanalabschnitts gegenüber der Querschnittsform der Einströmöffnung und der Überströmöffnung abgeflacht oder verschlankt ist, z.B. im zwischenliegenden Kanalabschnitt eine in Axialrichtung langgestreckte und in Radialrichtung verschlankte und/oder geringere Erstreckung als an der Einströmöffnung aufweist. Diese Ausführung hat den Vorteil, dass ein Düseneffekt mit einer Strömungsbeschleunigung erreicht werden kann und eine Anpassung des Strömungsquerschnitts an den Strömungsdurchgangsbereich zwischen Endscheibe und Filtergehäuseinnenwand erzielt wird. Die Strömungsbeschleunigung führt zu einem höheren Geschwindigkeitsvektor der mitgeführten Schmutzpartikel, die aufgrund ihrer Trägheit bei der anschließenden Strömungsberuhigung ihre vergleichsweise hohe Geschwindigkeit länger beibehalten und bei einer Änderung der Strömungsrichtung radial nach außen getragen werden, insbesondere in eine sich konisch erweiternden Gehäusebereich. So kann die Vorabscheidewirkung verbessert werden.

Es kann zweckmäßig sein, dass die Einströmöffnung eine kreisrunde Querschnittsform oder eine ovale Querschnittsform mit einem geringen Höhen- zu Breiten-Verhältnis aufweist, wohingegen der sich anschließende Kanalabschnitt abgeflacht ist, wobei die minimale Höhe des Kanalabschnitts im Bereich der Abflachung auf maximal die Hälfte des Durchmessers der Einströmöffnung reduziert sein kann. Als geringes Höhen- zu Breiten-Verhältnis der Einströmöffnung wird bevorzugt ein Verhältnis nahe 1, insbesondere größer 0,5 bzw. kleiner 2 bezeichnet, bevorzugt sind zur Sicherstellung Verhältnisse größer 2/3 bzw. kleiner 1,5, wobei die Kreisform aufgrund dadurch einfacher und kostengünstiger Anbindung und Abdichtung das Optimum ist.

Gemäß noch einer weiteren vorteilhaften Ausführung ist die Strömungsquerschnittsfläche der Überströmöffnung größer als die Strömungsquerschnittsfläche der Einströmöffnung. Über die Überströmöffnung kann das zu reinigende Fluid in Richtung der Anströmseite des Filtermediumkörpers weitergeleitet werden. Die verhältnismäßig große Überströmöffnung ermöglicht eine gleichmäßige Anströmung des Filtermediumkörpers von verschiedenen Seiten. Es ist insbesondere zweckmäßig, dass die Querschnittsfläche der Überströmöffnung des Einlasskanals der Querschnittsfläche des sich anschließenden Filtergrundgehäuses entspricht, das zur Aufnahme des Filterelements dient. Hierdurch ist gewährleistet, dass sich der Einlasskanal im Bereich der Überströmöffnung ohne Querschnittsänderung an das Filtergrundgehäuse anschließt, so dass sich im Übergang des Fluids vom Einlasskanal zum Filtergrundgehäuse eine gewünschte Strömung einstellen kann, beispielsweise ein aufgeprägter Drall der Strömung beibehalten und beispielsweise durch Leitschaufeln ein entsprechender Drall erzeugt wird.

Gemäß einer vorteilhaften Ausführung weist der Einlasskanal mindestens einen Krümmungsabschnitt auf und erfährt im Bereich des Krümmungsabschnitts eine Richtungsänderung von mindestens 45°. Die Richtungsänderung kann ggf. 90° oder annähernd 90° betragen. Des Weiteren kann es zweckmäßig sein, dass der Einlasskanal mindestens zwei Krümmungsabschnitte aufweist, wobei die Krümmungen sich ggf. in unterschiedliche Richtungen erstrecken können, um eine Umlenkung der Fluidströmung in verschiedene Richtungen zu bewirken. Im Bereich jedes Krümmungsabschnitts liegt die Krümmung bei mindestens 45°, ggf. bei 90° oder annähernd 90°. Dies ermöglicht es beispielsweise, durch eine doppelte 90°-Umlenkung das Fluid über die Einströmöffnung zunächst in einem rechten Winkel sowie versetzt zur Längsachse des Filterelements in den Einlasskanal einzuführen, anschließend über den ersten Krümmungsabschnitt in Radialrichtung zur Längsachse zu führen und danach in einem zweiten Krümmungsabschnitt achsparallel über die Überströmöffnung zum Filterelement zu leiten. Der zwischenliegende Kanalabschnitt liegt vorzugsweise zwischen den Krümmungsabschnitten.

Der Krümmungsabschnitt oder die Krümmungsabschnitte im Einlasskanal versetzen der Fluidströmung einen Drall. Mitgeführte Schmutzpartikel werden radial nach außen geführt. Der Drall, der der Fluidströmung über den Krümmungsabschnitt oder die Krümmungsabschnitte aufgeprägt wird, sorgt für ein Zirkulieren der Fluidströmung um die Anströmseite des Filtermediumkörpers, wodurch ebenfalls die Abscheidung von Schmutzpartikeln unterstützt und außerdem eine gleichmäßige Anströmung des Filtermediumkörpers über dessen Anströmseite verbessert wird.

Es kann zweckmäßig sein, dass die Krümmung mindestens eines Krümmungsabschnitts des Einlasskanals nicht konstant ist. Eine derartige Krümmung befindet sich insbesondere in einem mittleren Teil des betreffenden Krümmungsabschnitts, wohingegen der vorausliegende und der nachfolgende Teil eine geringere Krümmung aufweisen. Die größte Krümmung im mittleren Teil des Krümmungsabschnitts unterstützt die Abscheidung der mitgeführten Schmutzpartikel durch Auftreffen an der Innenseite der Einströmkanalwand.

In einer bevorzugten Ausführungsform weist der Einlasskanal in mindestens einem Kanalabschnitt einen entlang des Umfangs des Filtergehäuses rampenförmigen Verlauf auf, wobei der rampenförmige Verlauf bevorzugt derart ausgestaltet ist, dass entlang der Strömungsrichtung der Querschnitt in Axialrichtung des mindestens einen Kanalabschnitts abnimmt. Der rampenförmige Verlauf verläuft mindestens in einem Kanalabschnitt entlang der Längsseite eines ovalen Filtergehäuses und wird bevorzugt in einem an den Kanalabschnitt anschließenden Krümmungsabschnitt fortgesetzt. Der rampenförmige Verlauf entlang des Umfangs des Filtergehäuses ist weiter bevorzugt flach in Relation zu einer Ebene senkrecht zur Mittelachse ausgeführt, bevorzugt in einem Winkel von kleiner 30°.

Bevorzugt ist der mindestens eine Kanalabschnitt dabei zum Filtergrundgehäuse bzw. Filterelement hin offen ausgebildet ist, so dass durch den rampenförmigen Verlauf ein entlang des Umfangs des Filtergehäuses verteilter Übertritt der Strömung durch einen um das Ende des Filterelements herum angeordneten Strömungsdurchgang vom Einlassgehäuse in das Filtergrundgehäuse zum Filterelement bewirkt werden kann. Die Anordnung des rampenförmigen Verlaufs zumindest teilweise im Bereich oder entlang einer Längsseite des Filtergehäuses bzw. der Filtergehäuseaußenwand trägt dazu bei, einen größeren Teil der Strömung bereits dem Strömungsbereich um das Filterelement herum zuzuführen, bevor die um das Filterelement umlaufende Strömung im Bereich der Schmalseite, die im Vergleich zur Längsseite stärker gekrümmt ist, eine starke, vorabscheidungswirksame Umlenkung erfährt. Mindestens zwei Krümmungsabschnitte im Einlasskanal vorzusehen, weist den weiteren Vorteil auf, dass in Radialrichtung - bezogen auf die Längsachse des Filterelements - eine verhältnismäßig raumsparende Ausführung des Filtergehäuses und der Filtereinrichtung möglich ist. Der Einlasskanal erstreckt sich zumindest im Wesentlichen nicht oder nur geringfügig über die Außenkontur des Filtergrundgehäuses, in welchem das Filterelement aufgenommen ist, hinaus.

In einer weiteren vorteilhaften Ausführung ist der Filtermediumkörper faltenförmig ausgebildet, wobei die Längserstreckung der Filterfalten in Achsrichtung - bezogen auf die Längsachse des Filterelements - verläuft.

Gemäß einer vorteilhaften Ausführung befindet sich an der Anströmseite des Filtermediumkörpers ein strömungsdichtes Separierungselement, das sich über eine Teilfläche des Filtermediumkörpers erstreckt. Das strömungsdichte Separierungselement verhindert oder reduziert zumindest eine Anströmung des Filtermediumkörpers in diesem Abschnitt, wodurch eine Strömungsberuhigung des Rohfluids an der Anströmseite des Filtermediumkörpers erreicht wird.

Das Separierungselement ist beispielsweise als eine Beruhigungswand oder als eine Separierungsfolie ausgebildet und verhindert, dass an der Anströmseite das zu reinigende Fluid an der Position des Separierungselementes unmittelbar durch den Filtermediumkörper strömt. Das in Richtung der Anströmseite geleitete, ungereinigte Rohfluid wird an einem unmittelbaren Hindurchströmen des Filtermediumkörpers an der Position des Separierungselementes gehindert und ist daher gezwungen, sich in dem Raum an der Anströmseite des Filtermediumkörpers für einen zumindest geringfügig längeren Zeitraum aufzuhalten, was mit einer Strömungsberuhigung einhergeht. Im Anschluss hieran kann das ungereinigte Fluid den Filtermediumkörper durchströmen. Die Strömungsberuhigung hat zur Folge, dass größere Schmutzpartikel, die im Rohfluid mitgeführt werden, sich in dem der Anströmseite des Filtermediumkörpers vorgelagerten Raum absetzen können. Es findet somit eine Vorabscheidung statt, wobei die abgeschiedenen Partikel vorteilhafterweise über ein Austragventil aus dem Filtergehäuse abgeleitet werden können. Aufgrund der Vorabscheidung ist die Schmutzbelastung des Filtermediumkörpers reduziert.

Gemäß einer vorteilhaften Ausführung befindet sich das Separierungselement am Filtergehäuse, in welchem das Filterelement mit dem Filtermediumkörper aufgenommen ist. Das Separierungselement kann ggf. einteilig mit dem Filtergehäuse ausgebildet sein. Es handelt sich beispielsweise bei dem Separierungselement um eine Beruhigungswand, welche den Filtermediumkörper ringförmig umschließt und einen Abstand zur Außenseite des Filtermediumkörpers aufweist.

Gemäß einer weiteren vorteilhaften Ausführung ist das Separierungselement unmittelbar an dem Filterelement angeordnet, beispielsweise auf die Außenseite des Filtermediumkörpers aufgebracht. Bei dem Separierungselement handelt es sich zum Beispiel um eine Separierungsfolie, welche unmittelbar auf die Außenseite des Filtermediumkörpers aufgebracht ist. Im Bereich der Separierungsfolie ist keine unmittelbare radiale Anströmung des Filtermediumkörpers möglich. In einer faltenförmigen Ausführung des Filtermediumkörpers liegt die Separierungsfolie auf den Außenkanten der Filterfalten auf, wobei entlang der Längserstreckung der Filterfalten eine Ausbreitung von Rohfluid an der Anströmseite möglich ist. Auf diese Weise kann Rohfluid, welches an einer Stelle des Filtermediumkörpers ohne derartige Separierungsfolie radial eintritt, entlang der Längserstreckung der Falten axial bis in den Bereich geführt werden, in welchem sich die Separierungsfolie befindet, woraufhin der Filtermediumkörper auch in diesem Abschnitt radial durchströmt wird. Auf diese Weise kann auch der Abschnitt des Filtermediumkörpers für die Filtration genutzt werden, der von der Separierungsfolie abgedeckt ist.

Erfindungsgemäß ist sowohl ein Separierungselement in Form einer gehäuseseitigen Beruhigungswand als auch ein weiteres Separierungselement in Form einer filterelementseitigen Separierungsfolie vorgesehen. Diese beiden Separierungselemente befinden sich an axial gegenüberliegenden Seiten des Filtermediumkörpers des Filterelements.

In jedem Fall ist es zweckmäßig, dass das Separierungselement - oder die Summe sämtlicher Separierungselemente - sich nur über eine Teilfläche an der Anströmseite des Filtermediumkörpers erstrecken, so dass ein weiterer Teilabschnitt an der Anströmseite des Filtermediumkörpers frei von einem derartigen Separierungselement bleibt.

Gemäß noch einer weiteren vorteilhaften Ausführung erstreckt sich das Separierungselement von einer axialen Stirnseite des Filtermediumkörpers ausgehend in Achsrichtung sowie vollständig in Umfangsrichtung des Filtermediumkörpers. Die axiale Erstreckung des Beruhigungselementes ist jedoch in jedem Fall kleiner als die axiale Gesamtlänge des Filtermediumkörpers, so dass ein Teilabschnitt des Filtermediumkörpers frei von dem Separierungselement bleibt. Vorteilhafterweise ist die axiale Erstreckung eines Separierungselementes maximal so groß wie die halbe axiale Gesamtlänge des Filtermediumkörpers, beispielsweise nur maximal so groß wie ein Drittel der axialen Gesamtlänge des Filtermediumkörpers.

Im Fall einer Separierungsfolie als Separierungselement ist es zweckmäßig, dass die Separierungsfolie fest mit dem Filtermediumkörper verbunden ist, beispielsweise durch Aufkleben oder durch Verschweißen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung eine Filtereinrichtung als Luftfilter für eine Brennkraftmaschine, mit einem Filterelement mit langgestreckter Querschnittsform in einem Filtergehäuse und mit Leitschaufeln im Strömungsweg zwischen einer Einströmöffnung im Filtergehäuse und einem Filtermediumkörper des Filterelements,
- Fig. 2: das Ausführungsbeispiel aus Fig. 1 im Längsschnitt,
- Fig. 3: eine Filtereinrichtung im montierten Zustand, jedoch ohne ein Filtergrundgehäuse,
- Fig. 4: eine Filtereinrichtung in einem Schnitt quer zur Längsachse,
- Fig. 5: eine als Luftfilter ausgeführte Filtereinrichtung in einer Ausführungsvariante.

In den Figuren sind gleiche Bauteile mit gleichen Bezugszeichen versehen.

### Ausführungsformen der Erfindung

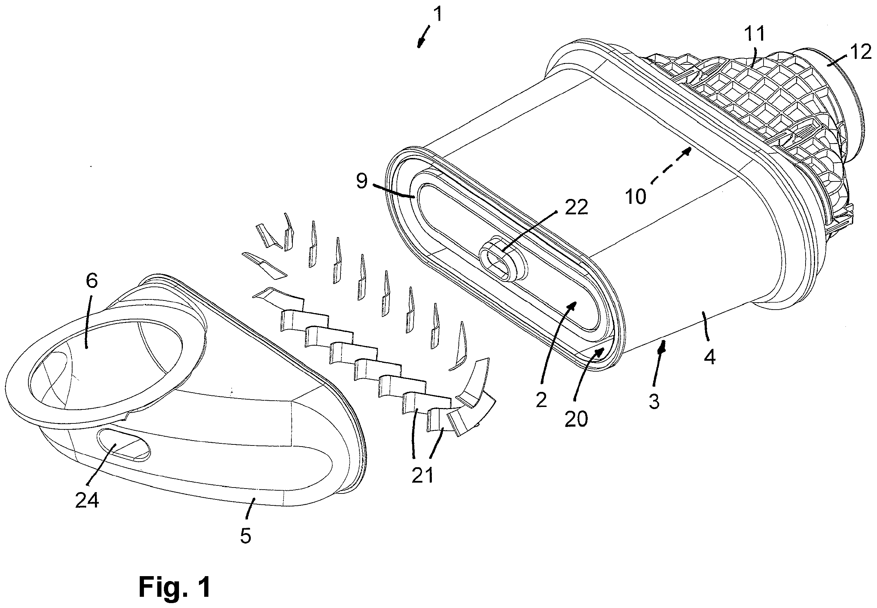

Im Ausführungsbeispiel gemäß Figuren 1 bis 4 ist eine Filtereinrichtung 1 dargestellt, die als Luftfilter im Ansaugtrakt einer Brennkraftmaschine zur Filtration der den Zylindern der Brennkraftmaschine zuzuführenden Verbrennungsluft ausgebildet ist. Die Filtereinrichtung 1 umfasst ein wie gezeigt bevorzugt radial durchströmbares Filterelement 2, das wie weiter bevorzugt eine langgestreckte, ovale, um die Längsachse 15 angeordnete Querschnittsform besitzt und in einem Filtergehäuse 3 mit bevorzugt ebenfalls ovaler, langgestreckter Querschnittsform mit einem in Fig. 1 dargestellten Filtergrundgehäuse(-teil) 4 und einem vorgelagerten Einlassgehäuse(-teil) 5 angeordnet ist, die beide Teile des Filtergehäuses 3 sind. Das Filtergrundgehäuse 4 nimmt das Filterelement 2 auf. Das Filtergrundgehäuse 4 weist eine um die Längsachse 15 herum angeordnete Außenwand mit bevorzugt ebenfalls ovaler, langgestreckter Querschnittsform auf. Das Filterelement 2 und Filtergehäuse 3, insbesondere die Außenwand, sind bevorzugt so ausgestaltet, dass über die axiale Länge des Filterelements 2 der Abstand zwischen Innenseite der Außenwand und dem Filterelement 2, insbesondere der Außenseite des Filtermediumkörpers 7, umlaufend konstant ist, um die Umströmung möglichst widerstandsfrei zu machen. Die ovale Querschnittsform von Filterelement 2 und Filtergehäuse 3 weist bevorzugt zwei gegenüberliegende Schmalseiten mit starker Krümmung auf, die jeweils mit zwei gegenüberliegenden Längsseiten mit schwacher Krümmung oder gar geradem Verlauf miteinander verbunden sind. Bevorzugt sind Filterelement 2 und/oder Außenwand des Filtergrundgehäuses 4 im Wesentlichen achssymmetrisch zur Mittel- bzw. Längsachse 15 ausgestaltet.

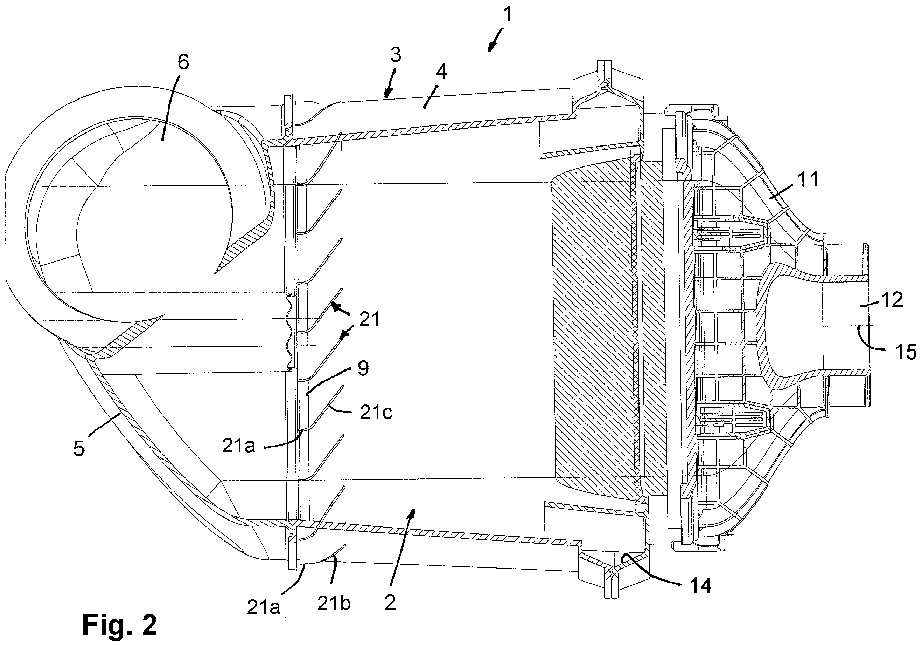

In dem Einlassgehäuse 5, das mit dem Filtergrundgehäuse 4 zu verbinden ist, befindet sich eine bevorzugt seitlich, bevorzugt exzentrisch angeordnete, bevorzugt kreisförmige Einströmöffnung 6, über die die Verbrennungsluft in das Filtergehäuse 3 eingeführt und in Richtung des Filterelements 2 geleitet wird. Gemäß Fig. 2 ist das Filtergrundgehäuse 4 zur Aufnahme des Filterelements 2 einteilig ausgebildet; auch das Einlassgehäuse 5 ist einteilig mit dem Filtergrundgehäuse 4 ausgebildet.

Das Filterelement 2 weist einen bevorzugt zickzackförmig gefalteten Filtermediumkörper 7 (Fig. 2) auf, der ringförmig geschlossen ausgebildet und bevorzugt mit einer langgestreckten, ovalen Querschnittsform versehen ist. Der Filtermediumkörper 7 wird bezogen auf seine Mittellängsachse 15 radial von außen nach innen von dem zu filtrierenden Fluid - der Verbrennungsluft - durchströmt, so dass die Außenseite des Filtermediumkörpers 7 die Roh- oder Anströmseite und die Innenseite die Reinseite bildet. Der Filtermediumkörper 7 ist an seiner Innen- bzw. Reinseite bevorzugt von einem Stützgerüst 8, welches aus Kunststoff besteht, ausgekleidet. Der innenliegende Strömungsraum im Filtermediumkörper 7 bildet den Reinraum, in welchem sich das gereinigte Fluid sammelt und aus dem das gereinigte Fluid axial abgeleitet wird.

An den beiden gegenüberliegenden Stirnseiten des Filterelements 2 ist jeweils eine Endscheibe 9, 10 angeordnet, wobei die der Einströmöffnung 6 benachbarte erste Endscheibe 9 geschlossen ausgebildet und die zweite, gegenüberliegende, der Einströmöffnung 6 abgewandte Endscheibe 10 offen ausgebildet ist, so dass das Fluid aus dem innenliegenden Reinraum axial über die offene Endscheibe 10 abströmen kann. An das Filtergrundgehäuse 4 schließt sich benachbart zur offenen Endscheibe 10 des Filterelements 2 ein gehäuseseitiger Auslassabschnitt 11 mit einer bevorzugt koaxialen, zentralen Abströmöffnung 12 an, über die das gereinigte Fluid aus der Filtereinrichtung 1 abgeleitet wird.

Die Querschnittsform des Filterelements 2 bzw. Filtermediumkörpers 7 ist langgestreckt, wobei - bezogen auf den Querschnitt - die beiden gegenüberliegenden Längsseiten bevorzugt eben sind und beispielsweise parallel zueinander verlaufen und über gekrümmte Schmalseiten verbunden sind. Ein gerader oder schwach gekrümmter Verlauf der Längsseiten erlaubt eine für flache Bauräume besonders geeignete Bauform. Die Erstreckung der Längsseiten ist mindestens doppelt so groß wie die von den Schmalseiten überbrückte Distanz, also dem Abstand zwischen den beiden Längsseiten. Das Filterelement 2 und Filtermediumkörper 7 weisen über die axiale Länge - bezogen auf die Mittellängsachse 15 - bevorzugt eine nicht-konstante Querschnittsfläche auf, die im Bereich der geschlossenen Endscheibe 9 kleiner ist als im gegenüberliegenden Bereich mit der offenen Endscheibe 10 und von der kleineren zur größeren Querschnittsfläche kontinuierlich und gleichmäßig anwächst. Das Filterelement ist damit bevorzugt konisch ausgeführt. Die konische Form unterstützt den Staubaustrag, da dadurch eine geringere absolute Strömungsgeschwindigkeit in dem Bereich mit größerem Durchmesser erzielt werden kann. Diese Strömungsberuhigung kann das Ablagern der Partikel im Gehäuse erleichtern. Daher ist es ferner bevorzugt, wenn die nicht-konstante Querschnittsfläche in Richtung des Bereichs, in welchem der Staubaustrag erfolgt, d.h. vorliegend auf der Seite, auf welcher die offene Endscheibe 10 und die Abströmöffnung 12 angeordnet sind, größer ist als auf der axial gegenüberliegenden Seite.

Benachbart zu dem gehäuseseitigen Auslassabschnitt 11 befindet sich im Filtergrundgehäuse 4 ein radial erweiterter Ringraum 14, an dem ein Austragsventil 13 angeordnet ist. In dem radial erweiterten Ringraum 14 können sich abgesonderte Schmutzpartikel sammeln, die über das Austragsventil 13 aus dem Filtergehäuse 3 abgeleitet werden können.

An der Außenseite der geschlossenen Endscheibe 9 ist ein mittig platziertes Stützauge 22 angeformt, mit dem das Filterelement 2 von außen axial abgestützt werden kann. Hierfür ist in dem Einlassgehäuse 5 ein Lager angeformt, das axial mit dem Stützauge 22 fluchtet.

Die über die Einströmöffnung 6 eingeleitete Verbrennungsluft strömt in Richtung eines Strömungsdurchgangs 20, der sich zwischen dem Außenumfang der geschlossenen Endscheibe 9 am Filtermediumkörper 7 und der Innenseite der Außenwand des das Filterelement 2 aufnehmenden Filtergrundgehäuses 4 befindet. In dem Strömungsdurchgang 20 sind bevorzugt Leitschaufeln 21 angeordnet, welche dazu beitragen, der durch den Einlasskanal 29 einströmende Verbrennungsluft im folgenden Verlauf im Filtergehäuse 3 einen schraubenartig umlaufenden Verlauf aufzuprägen. Die Leitschaufeln 21 weisen bevorzugt einen flachen Winkel gegenüber der geschlossenen Endscheibe 9 auf, beispielsweise zwischen 10 und 40°. Hierdurch wird die Luftströmung im Ringraum zwischen der Innenseite der Außenwand des Filtergrundgehäuses 4 und dem Filtermediumkörper 7 in eine zirkulierende, umlaufende Bewegung versetzt, wodurch mitgeführte Schmutzpartikel an der Innenseite der Außenwand des Gehäuses abgeschieden werden. Die abgelagerten Schmutzpartikel können über das Austragsventil 13 aus dem Filtergehäuse 3 abgeleitet werden.

Der Strömungsweg 20, welcher sich zwischen der Außenkontur der Endscheibe 9 und der Innenseite der umschließenden Gehäusewand des Filtergehäuseteils 4b erstreckt, ist ringförmig umlaufend ausgebildet und weist mindestens in einem Teil und bevorzugt nur in einem Teil seiner umlaufenden Länge die Leitschaufeln 21 auf. Über einen weiteren Teil ist der Strömungsweg 20 bevorzugt von einer Blende 25 abgedeckt, die sich vollständig über eine Schmalseite und teilweise noch entlang einer der beiden Längsseiten erstreckt. Hierdurch wird der freie, für die Durchströmung zur Verfügung stehende Teil des Strömungswegs reduziert. Bevorzugt ist jedoch der verbliebene, nicht durch die Blende 25 abgedeckte, effektive Strömungsquerschnitt des Strömungswegs 20 wie auch in der gezeigten Ausführungsform mindestens so groß wie der Querschnitt der Einströmöffnung 6. Hierdurch kann die eintretende Luft so in das Filtergehäuse geleitet werden, dass die Vorabscheidung verbessert wird. Dies erfolgt insbesondere dadurch, dass ein Überströmen in überwiegend axialer Richtung durch die Blende 25 verhindert wird, so dass ein möglichst großer Teil der eintretenden Luft auf einen umlaufend rotierenden Strömungsweg geleitet wird.

Das Einlassgehäuse 5 bildet und/oder umfasst einen Einlasskanal 29, der sich zwischen der Einströmöffnung 6 und einer Überströmöffnung 30 erstreckt, wobei der Einlasskanal 29 im Bereich der Überströmöffnung 30 mit dem Filtergrundgehäuse 4 verbunden wird. Im montierten Zustand liegt die Überströmöffnung 30, die das Ende des Einlasskanals 29 bildet, benachbart zur geschlossenen Endscheibe 9 des Filterelements 2. Die über den Einlasskanal 29 herangeführte Verbrennungsluft strömt nach Verlassen der Überströmöffnung 30 durch den Strömungsdurchgang 20 zwischen dem Außenumfang der geschlossenen Endscheibe 9 und der Innenseite der Außenwand des Filtergehäuses 3 bzw. bevorzugt wie hier gezeigt des Filtergrundgehäuses 4.

Der Einlasskanal 29 weist einen ersten Krümmungsabschnitt 5a, einen zwischenliegenden Kanalabschnitt 5b sowie einen zweiten Krümmungsabschnitt 5c auf, wobei im Bereich jedes Krümmungsabschnitts 5a, 5c der Einlasskanal 29 eine Richtungsänderung von 90° erfährt. Der erste Krümmungsabschnitt 5a, welcher sich an die Einströmöffnung 6 anschließt und in den zwischenliegenden Kanalabschnitt 5b mündet, weist im Bereich der Einströmöffnung 6 eine bevorzugt kreisrunde Querschnittsfläche auf, die sich im Übergang zum zwischenliegenden Kanalabschnitt 5b zu einer in axialer Richtung langgestreckten Querschnittsfläche ändert. An den zwischenliegenden Kanalabschnitt 5b, der die langgestreckte Querschnittsfläche aufweist, schließt sich der zweite Krümmungsabschnitt 5c an, der eine weitere 90°-Richtungsänderung vollführt und in die Überströmöffnung 30 mündet. Die Überströmöffnung 30 besitzt eine an die zugewandte Öffnung des Filtergrundgehäuses 4 angepasste Querschnittsform und Querschnittsfläche und ist entsprechend wie das Filtergrundgehäuse 4 längsgestreckt.

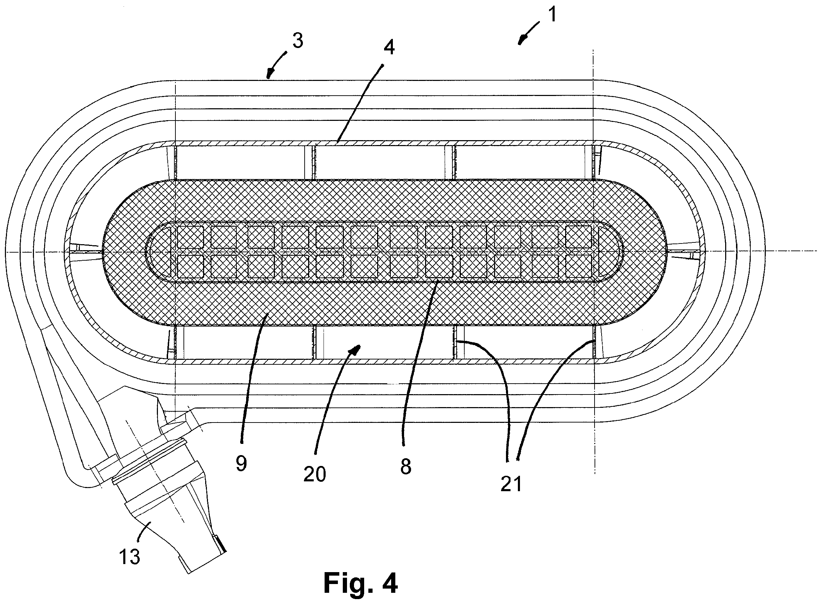

Die Querschnittsform des Einlasskanals 29 ändert sich über seine Länge in der Weise, dass der zwischen der runden Einströmöffnung 6 und der Überströmöffnung 30 liegende Kanalabschnitt 5b eine Querschnittsform aufweist, die sich sowohl von der Querschnittsform der Einströmöffnung 6 als auch von der Querschnittsform der Überströmöffnung 30 unterscheidet. Der Einlasskanal 29 besitzt einen düsenähnlichen Querschnittsverlauf, bei dem die Querschnittsform des zwischenliegenden Kanalabschnitts 5b gegenüber der Querschnittsform der Einströmöffnung 6 und der Überströmöffnung 30 abgeflacht ist. Im Ausführungsbeispiel weist der zwischenliegende Kanalabschnitt 5b eine Art Brotform auf, siehe hierzu auch Figur 4.

Der zwischenliegende Kanalabschnitt 5b mit abgeflachter Querschnittsform ist in axialer Richtung zu der Überströmöffnung 30 hin, die eine erweiterte Querschnittsfläche besitzt, bzw. zu dem Strömungsweg 20 hin offen ausgebildet. In Längsrichtung des Einlasskanals 29 gesehen mündet der zwischenliegende Kanalabschnitt 5b in die Überströmöffnung 30. Der Kanalabschnitt 5b und Krümmungsabschnitt 5c sind bevorzugt zumindest in teilweiser Überdeckung mit dem Strömungsweg 20 angeordnet, d.h. entlang des Außenumfangs des Filtergehäuses 3 und/oder der Überströmöffnung 30.

Die Längsachse 150 durch die Einströmöffnung 6 kreuzt die Längsachse 15 des Filterelements 2, sie liegt entsprechend winklig, insbesondere annähernd unter einem 90°-Winkel (+/-20) zur Längsachse 15, bevorzugt mit seitlichem Abstand, nicht schneidend, zur Längsachse 15. Die Ausrichtung im Wesentlichen senkrecht zur Längsachse 15 entspricht einer Ausrichtung im Wesentlichen parallel zur geschlossenen Endscheibe 9. Die Längsachse 150 durch die Einströmöffnung 6 kann im Wesentlichen in Richtung einer Langseite des Filtergehäuses 3 gerichtet sein, in diesem Fall entfällt der erste Krümmungsabschnitt 5a. Alternativ kann die Längsachse 150 durch die Einströmöffnung 6 wie in der gezeigten Ausführungsform in einem Winkel zur Längsseite, vorliegend ungefähr senkrecht zu dieser, entlang und bevorzugt beabstandet von der Kurzseite des Filtergrundgehäuses 4, verlaufen. Mittels des ersten Krümmungsabschnitts 5a wird eine Umlenkung in Radialrichtung auf die Längsachse 15 zu, insbesondere entlang der Längsseite des Strömungswegs 20, erreicht. Mittels des zweiten Krümmungsabschnitts 5c wird eine weitere Umlenkung um 90° in Richtung der Längsachse 15 erzielt.

Der erste Krümmungsabschnitt 5a des Einlasskanals 29 ist bevorzugt nicht mit einer konstanten Krümmung versehen, sondern setzt sich aus verschiedenen Teilen unterschiedlicher Krümmung zusammen, um eine druckverlustoptimierte Umlenkung erreichen zu können. In einem mittleren Teil 31 des ersten Krümmungsabschnitts 5a ist die Krümmung am größten, unmittelbar vor diesem mittleren Teil 31 und nach diesem mittleren Teil 31 des ersten Krümmungsabschnitts 5a ist die Krümmung dagegen geringer. Diese Maximalkrümmung im mittleren Teil 31 des ersten Krümmungsabschnitts 5a bewirkt eine entsprechend starke Richtungsänderung, wodurch Schmutzpartikel, die im Luftstrom mitgeführt werden, schon in Richtung der Innenseite der Einlasswand gelenkt werden, wodurch die Abscheidung dieser Schmutzpartikel in der Folge unterstützt wird. Die Umlenkung des Luftmassenstroms im zweiten Krümmungsabschnitt und parallel und bevorzugt zumindest teilweise in Überdeckung dazu in der Schmalseite des Filtergrundgehäuses 4 führt in beiden Bereichen zu einem Transport von Partikeln nach außen, wobei die beiden Bereiche bevorzugt durch den Strömungsweg 20 miteinander verbunden sind. Dadurch entsteht nicht nur innerhalb des Filtergrundgehäuses 4, sondern auch schon in den noch im Einlassgehäuse 5 bzw. Kanalabschnitt 5b bzw. Krümmungsabschnitt 5c befindlichen Strömungsteilen eine Vorabscheidewirkung.

Die Verjüngung des freien Strömungsquerschnitts im Bereich des zwischenliegenden Kanalabschnitts 5b und die anschließende Erweiterung des Strömungsquerschnitts im Bereich des zweiten Krümmungsabschnitts 5c bewirkt einen Düseneffekt mit einer Strömungsbeschleunigung und einer anschließenden Strömungsberuhigung. Bei der beschleunigten Strömung werden die Schmutzpartikel aufgrund ihrer Trägheit nach außen getragen. Die anschließende Beruhigung der Luftströmung führt zu einer gleichmäßigen Anströmung des Filtermediumkörpers über dessen axiale Länge und Umfang.

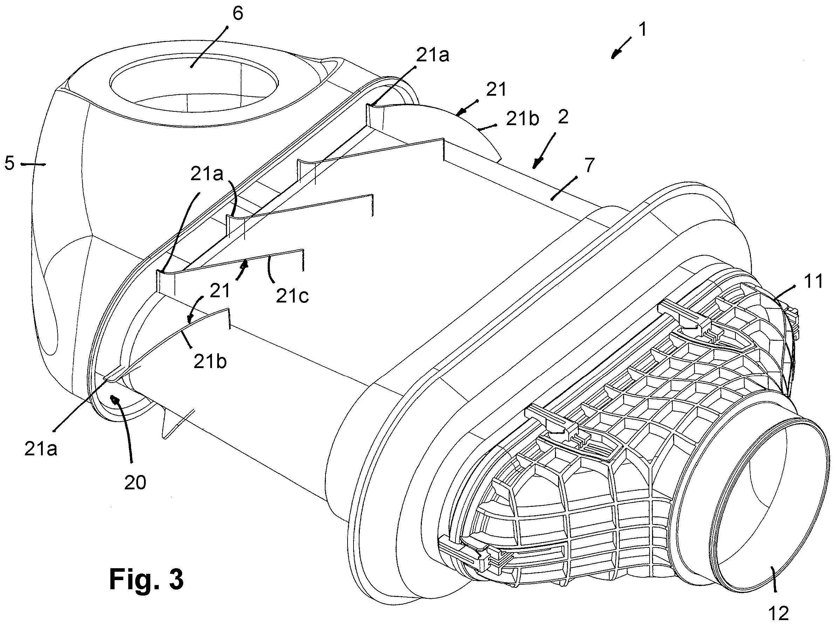

Figur 4 entspricht Figur 2, wobei hier gestrichelt schematisch der insbesondere "brotförmige" Strömungsquerschnitt 160 des Kanalabschnitts 5b dargestellt ist. Der Strömungsquerschnitt des Kanalabschnitts 5b weist eine insbesondere im Vergleich zum Querschnitt der Einströmöffnung 6 schmale, in Richtung der Längsachse 15 langgestreckte Form auf und ist in der gezeigten Ausführungsform an der Schnittebene, die ungefähr auf der in Fig. 3 gezeigten Position verläuft, bereits nach unten, d.h. zum Filterelement 2 hin, offen, wobei wie gezeigt an dieser Stelle vorteilhaft eine direkte, im Wesentlichen axiale Anströmung des Filterelements 2 von der Blende verhindert wird, so dass die Luft auf einen Strömungsweg entlang des Kanalabschnitts, insbesondere entlang des Strömungsdurchgangs 20, insbesondere zunächst entlang der Längsseite geführt wird. Die Höhe des Einlasskanals 29 sinkt entlang des Strömungswegs bzw. entlang des Umfangs des Filtergehäuses 3 zumindest entlang des Kanalabschnitts 5c. Dies bedeutet, dass der Einlasskanal 29, insbesondere Kanalabschnitt 5b sowie bevorzugt der daran anschließende zweite Krümmungsabschnitt 5c eine entlang des Umfangs des Einlassgehäuses 5 bzw. des Filtergehäuses 3 verlaufende Rampe bilden, die einen entlang des Umfangs des Filtergehäuses 5 verteilten Übertritt der Strömung durch den Strömungsdurchgang 20 vom Einlassgehäuse 5 in das Filtergrundgehäuse 4 bewirkt und von den Leitschaufeln 21 unterstützt wird. Wie aus Fig. 3 ersichtlich befindet sich die Blende 25 benachbart zu oder an der Stelle, an welcher der Einlasskanal 29 zum Filterelement 2 hin öffnet oder zu öffnen beginnt, wie vorliegend gezeigt bevorzugt im Bereich der der Einströmöffnung 6 zugewandten Schmalseite von Filterelement 2 oder Filtergehäuse 3, wobei sich wie gezeigt die Blende auch über einen Anfangsteil der Längsseite in Strömungsrichtung erstreckt. So ist der zur Verfügung stehende Bauraum druckverlustoptimiert für die Strömung zur Verfügung gestellt. Die Blende 25 unterstützt dabei, einem größtmöglichen Teil der Gesamtströmung eine umlaufende Bahn aufzuprägen. Am Ende der Rampe bzw. am Ende des Einlasskanals 29, bevorzugt wie gezeigt am zweiten Krümmungsabschnitt 5 c, weitet der Einlasskanal 29 bevorzugt auf. Dies ermöglicht im Bereich starker Krümmung an der Schmalseite, dass ein Teil der Strömung bei der Richtungsänderung am zweiten Krümmungsabschnitt 5c über die Endscheibe 9 bzw. deren schmalseitigen Endbereich hinweg strömt. So kann der Druckverlust an dieser Stelle reduziert werden, ohne nennenswerte Einbußen beim Vorabscheidegrad in Kauf nehmen zu müssen.

Die Leitschaufeln 21 sind bevorzugt fest mit der geschlossenen Endscheibe 9 verbunden und ragen in Radialrichtung über die Außenkontur der Endscheibe 9 hinaus. Vorteilhafterweise erstrecken sich die Leitschaufeln 21 bis zur Innenseite der Außenwand des aufnehmenden Filtergrundgehäuses 4.

Die Leitschaufeln 21 setzen sich jeweils aus einem Befestigungsabschnitt 21a und einem Strömungsleitabschnitt 21b bzw. 21c zusammen, wobei Befestigungsabschnitt und Strömungsleitabschnitt einteilig ausgebildet sind. Über den Befestigungsabschnitt 21a sind die Leitschaufeln 21 mit der Endscheibe 9 verbunden. Die Strömungsleitabschnitte 21b und 21c dienen zur Strömungsführung der herangeführten Verbrennungsluft.

Entlang der Schmalseiten des Filtermediumkörpers 7 sind gekrümmte Strömungsleitabschnitte 21b angeordnet, wohingegen an den Längsseiten des Filtermediumkörpers 7 ebene oder zumindest annähernd ebene, geradflächige Strömungsleitabschnitte 21c angeordnet sind. Die gekrümmten Strömungsleitabschnitte 21b im Bereich der Schmalseiten tragen der Krümmung der Kontur der Schmalseiten Rechnung und folgen entsprechend der Krümmung. Die Längsseiten des Filtermediumkörpers 7 sind dagegen eben bzw. geradflächig ausgebildet, was auch eine entsprechend ebene bzw. geradflächige Ausführung der Strömungsleitabschnitte 21c ermöglicht.

Die Befestigungsabschnitte 21a und die Strömungsleitabschnitte 21b bzw. 21c stehen winklig zueinander. Der Winkel zwischen den Abschnitten liegt bei etwa 60°.

Die Leitschaufeln 21 erstrecken sich - in Achsrichtung gesehen - winklig zur Filterelementlängsachse und in Richtung des Filtermediumkörpers 7.

Die Leitschaufeln 21 sind gleichmäßig über den Umfang verteilt an der Endscheibe 9 angeordnet.

Im montierten Zustand liegen die Leitschaufeln 21 vollständig innerhalb des Filtergrundgehäuses 4.

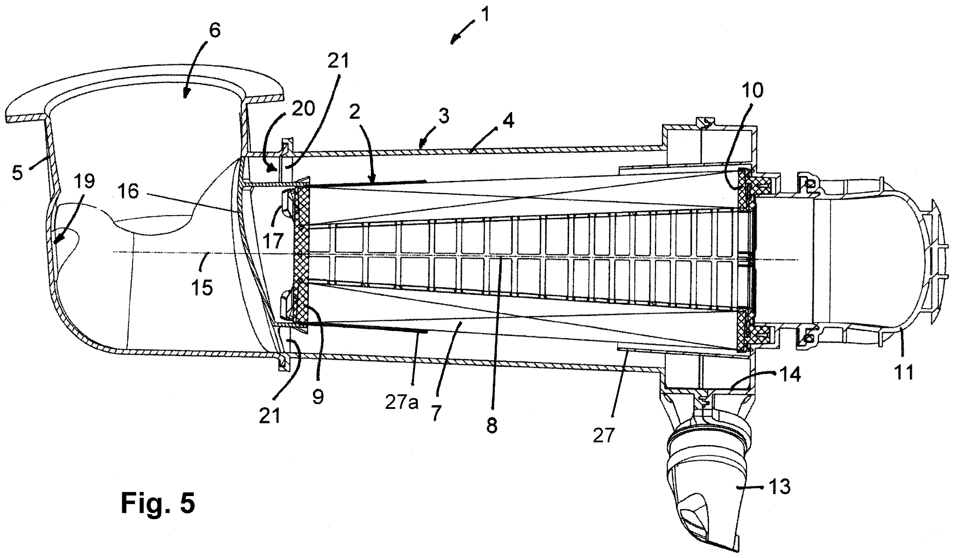

In Fig. 5 ist eine Ausführungsvariante einer als Luftfilter ausgebildeten Filtereinrichtung 1 dargestellt. Die Filtereinrichtung 1 gemäß Fig. 5 umfasst ein Filterelement 2, das hohlzylindrisch oder mit langgestreckter Querschnittsform ausgebildet und in einem Filtergehäuse 3 angeordnet ist, welches ein Filtergrundgehäuse 4 und ein vorgelagertes Einlassgehäuse 5 umfasst. Das Filtergrundgehäuse 4 und das Einlassgehäuse 5, an dem sich eine Einströmöffnung 6 befindet, sind einteilig ausgebildet. Das Filtergrundgehäuse 4 nimmt in seinem Aufnahmeraum 26 das Filterelement 2 auf. Die zu filtrierende Verbrennungsluft wird über die seitlich angeordnete Einströmöffnung 6 in das Filtergehäuse 3 eingeführt und in Richtung des Filterelementes 2 geleitet. Bezogen auf die Mittellängsachse 15 des Filterelementes 2 liegt die Einströmöffnung 6 seitlich bzw. radial verschoben, wobei die Einströmachse der Einströmöffnung 6 unter einem Winkel von annähernd 90° zur Mittellängsachse 15 des Filterelementes 2 steht.

Das Filterelement 2 weist einen Filtermediumkörper 7 auf, der ringförmig geschlossen ausgebildet und mit einer langgestreckten Querschnittsform versehen ist. Der Filtermediumkörper 7 wird bezogen auf seine Mittellängsachse 15 radial von außen nach innen von dem zu filtrierenden Fluid - der Verbrennungsluft - durchströmt, so dass die Außenseite des Filtermediumkörpers 7 die Roh- oder Anströmseite und die Innenseite die Reinseite bildet. Der Filtermediumkörper 7 ist an seiner Innen- bzw. Reinseite von einem Stützgerüst 8, welches aus Kunststoff besteht, ausgekleidet. Der innenliegende Strömungsraum im Filtermediumkörper 7 bildet den Reinraum, in welchem sich das gereinigte Fluid sammelt und aus dem das gereinigte Fluid axial abgeleitet wird.

An beiden gegenüberliegenden Stirnseiten des Filtermediumkörpers 7 ist jeweils eine Endscheibe 9, 10 angeordnet, wobei die der Einströmöffnung 6 benachbarte erste Endscheibe 9 geschlossen ausgebildet und die zweite, gegenüberliegende, der Einströmöffnung 6 abgewandte Endscheibe 10 offen ausgebildet ist, so dass das Fluid aus dem innenliegenden Reinraum axial über die offene Endscheibe 10 abströmen kann. An das Filtergrundgehäuse 4 schließt sich benachbart zur offenen Endscheibe 10 des Filterelementes 2 ein gehäuseseitiger Auslassabschnitt 11 mit einer Abströmöffnung 12 an, über die das gereinigte Fluid aus der Filtereinrichtung 1 abgeleitet wird. Der Auslassabschnitt 11 ist separat von dem Filtergrundgehäuse 4 ausgebildet, jedoch mit dem Filtergrundgehäuse 4 verbunden.

Die Querschnittsform des Filterelementes 2 bzw. des Filtermediumkörpers 7 kann langgestreckt ausgeführt sein, wobei die Längsseiten beispielhaft eben und parallel zueinander verlaufen und über gekrümmte Schmalseiten verbunden sind. Es ist aber auch eine kreisrunde Querschnittsform des Filterelementes 2 und des Filtermediumkörpers 7 möglich.

Das Filterelement 2 und der Filtermediumkörper 7 weisen über die axiale Länge - bezogen auf die Mittellängsachse 15 - eine nicht-konstante Querschnittsfläche auf, die im Bereich der geschlossenen Endscheibe 9 kleiner ist als im gegenüberliegenden Bereich mit der offenen Endscheibe 10 und von der kleineren zur größeren Querschnittsfläche kontinuierlich und gleichmäßig anwächst.

Benachbart zu dem gehäuseseitigen Auslassabschnitt 11 befindet sich im Filtergrundgehäuse 4 ein radial erweiterter Ringraum 14, der einen Schmutzsammelbereich bildet und an dem ein Austragventil 13 angeordnet ist. In dem radial erweiterten Schmutzsammelbereich 14, der ringförmig ausgebildet ist, können sich abgesonderte Schmutzpartikel sammeln, die über das Austragventil 13 aus dem Filtergehäuse 3 abgeleitet werden können.

Das Austragventil 13 ist vorzugsweise als passives Ventil ausgebildet, das durch äußere Einflüsse von der üblicherweise geschlossenen Position in eine geöffnete Position verstellt werden kann, in der die Schmutzpartikel abgeleitet werden können. Es ist beispielsweise möglich, das Austragventil 13 an eine Unterdruckquelle anzuschließen, z.B. mit der Saugseite eines Kühlergebläses in einem Fahrzeug zu verbinden, so dass das Austragventil 13 bei ausreichend hohem Unterdruck geöffnet wird.

Der Schmutzsammelbereich 14 kommuniziert mit dem Aufnahmeraum 26 an der Roh- bzw. Anströmseite des Filtermediumkörpers 7. Axial befindet sich der Schmutzsammelbereich 14 benachbart zu der offen ausgebildeten Endscheibe 10 an der Abströmseite des Filterelements 2. Bezogen auf die axiale Gesamtlänge des Filterelementes 2 erstreckt sich der Schmutzsammelbereich 14 über eine axiale Teillänge, die nicht mehr als 20 % der Gesamtlänge des Filterelementes 2 beträgt. Der Schmutzsammelbereich 14 ist radial gegenüber der unmittelbar angrenzenden Gehäusewand des Filtergrundgehäuses 4 erweitert. In der axialen Mitte des Schmutzsammelbereichs 14 stoßen das Filtergrundgehäuse 4 und der Auslassabschnitt 11 des Gehäuses aneinander.

In Radialrichtung ist der Schmutzsammelbereich 14 über ein Separierungselement 27 von dem Filtermediumkörper 7 separiert, wobei das Separierungselement 27 als eine umlaufende, konisch ausgebildete Beruhigungswand 27 ausgebildet ist, die Teil des Filtergehäuses 3 ist. Die Beruhigungswand 27 bildet die radial innenliegende Begrenzungswand des Schmutzsammelbereichs 14. Die Beruhigungswand 27 läuft ringsum und liegt mit geringem Abstand zur Anström- bzw. Rohseite des Filtermediumkörpers 7. In Achsrichtung erstreckt sich die Beruhigungswand 27 von einem stirnseitigen Abschnitt des Filtergehäuses 3, insbesondere des Auslassabschnittes 11, in Höhe der Endscheibe 10 bis über die axiale Erstreckung des Schmutzsammelbereichs 14 hinaus. Die axiale Länge der Beruhigungswand 27 beträgt beispielsweise mindestens ein Viertel der axialen Gesamtlänge des Filterelementes 2. Die Beruhigungswand 27 sorgt für eine Strömungsberuhigung in diesem axialen Abschnitt im Aufnahmeraum 26 und reduziert in diesem Abschnitt die Anströmung des Filtermediumkörpers 7. Der Schmutzsammelbereich 14 ist mit dem Aufnahmeraum 26 strömungsverbunden.

Aufgrund der Strömungsberuhigung und der größeren radialen Erstreckung des Schmutzsammelbereichs 14 im Vergleich zu der unmittelbar benachbarten Gehäusewand des Filtergrundgehäuses 4 können sich Schmutzpartikel im Schmutzsammelbereich 14 ablagern, die anschließend über das Austragventil 13 abgeführt werden.

Die Beruhigungswand 27 befindet sich axial benachbart zur offenen Endscheibe 10 und erstreckt sich in Achsrichtung, von der offenen Endscheibe 10 ausgehend, über einen Teilbereich des Filtermediumkörpers 7.

An der axial gegenüberliegenden Seite befindet sich ein weiteres Separierungselement 27a in Form einer Separierungsfolie, die unmittelbar auf den Filtermediumkörper 7 aufgebracht ist. Die Separierungsfolie 27a erstreckt sich von der geschlossenen Endscheibe 9 ausgehend in Achsrichtung, so dass die Beruhigungswand 27 und die Separierungsfolie 27a sich von gegenüberliegenden Stirnseiten aus axial in Richtung der Mitte des Filtermediumkörpers 7 erstrecken. Die axiale Länge der Beruhigungswand 27 und der Separierungsfolie 27a ist zumindest annähernd gleich groß. In der Mitte zwischen den beiden Separierungselementen 27 und 27a befindet sich ein Teilabschnitt des Filtermediumkörpers 7, der frei ist von Separierungselementen und somit unmittelbar von dem zu reinigenden Rohfluid radial angeströmt werden kann.

Beide Separierungselemente 27 und 27a sorgen für eine Strömungsberuhigung des in den Anströmraum an der Anströmseite des Filtermediumkörpers einströmenden Rohfluids, wodurch es ermöglicht wird, dass sich grobe Schmutzpartikel im Ringraum 14 absetzen, die über das Austragventil 13 ausgetragen werden können. Trotz der Separierungselemente 27 und 27a kann der Filtermediumkörper 7 über seine gesamte axiale Länge und seine gesamte Anströmseite von dem Rohfluid angeströmt werden. Die Beruhigungswand 27 liegt radial auf Abstand zur Anströmseite des Filtermediumkörpers 7, wodurch ein Ringraum zwischen der Beruhigungswand 27 und der Anströmseite des Filtermediumkörpers gebildet ist, in den das Rohfluid einströmen kann.

Der Filtermediumkörper 7 ist faltenförmig ausgebildet, wobei die Längserstreckung der Falten parallel zur Längsachse 15 des Filterelements verläuft. Im Bereich der Beruhigungsfolie 27a, die unmittelbar auf den Filtermediumkörper 7 aufgebracht ist und beispielsweise mit dem Filtermediumkörper 7 verschweißt oder verklebt ist, kann das Rohfluid entlang der Falten des Filtermediumkörpers 7 ausgehend von dem Teilabschnitt des Filtermediumkörpers ohne Separierungselemente axial in den Teilbereich strömen, der von der Separierungsfolie 27a abgedeckt ist. Auf diese Weise steht auch im Bereich der Separierungsfolie 27a der Filtermediumkörper 7 für die Filtration des Rohfluids zur Verfügung.

## Patentansprüche

1. Filtereinrichtung zur Filtration der einer Brennkraftmaschine zuzuführenden Verbrennungsluft, mit einem Filtergehäuse (3) und mit einem vom Filtergehäuse (3) aufgenommenen Filterelement (2), das Filterelement mit einem ringförmigen Filtermediumkörper (7) und mit einer geschlossenen Endscheibe (9) an einer Stirnseite des Filtermediumkörpers (7), wobei am Filterelement (2) benachbart zu der geschlossenen Endscheibe (9) mehrere Leitschaufeln (21) angeordnet sind, die sich radial über die Außenkontur der geschlossenen Endscheibe (9) hinaus erstrecken und in einen der Anströmseite des Filtermediumkörpers (7) vorgelagerten Strömungsweg (20) hineinragen, wobei die Leitschaufeln (21) an der geschlossenen Endscheibe (9) gehalten sind, **dadurch gekennzeichnet, dass** die Leitschaufeln axial zumindest annähernd in gleicher Höhe wie die geschlossene Endscheibe liegen und am oder benachbart zum Filtermediumkörper (7) des Filterelements (2) ein strömungsdichtes Separierungselement (27) angeordnet ist, das sich auf der Anströmseite über eine Teilfläche des Filtermediumkörpers (7) erstreckt, wobei sowohl ein Separierungselement (27) in Form einer gehäuseseitigen Beruhigungswand als auch ein weiteres Separierungselement in Form einer sich von der geschlossenen Endscheibe (9) ausgehend in Achsrichtung erstreckenden, filterelementseitigen Separierungsfolie (27a) vorgesehen ist und sich diese beiden Separierungselemente (27, 27a) an axial gegenüberliegenden Seiten des Filtermediumkörpers (7) des Filterelements (2) befinden.

2. Filtereinrichtung nach Anspruch 1, **dadurch gekennzeichnet, dass** die Leitschaufeln (21) gleichmäßig über den Umfang der Endscheibe (9) verteilt angeordnet sind.

3. Filtereinrichtung nach Anspruch 1 oder 2, **dadurch gekennzeichnet, dass** der ringförmige Filtermediumkörper (7) des Filterelements (2) eine langgestreckte Querschnittsform aufweist.

4. Filtereinrichtung nach einem der Ansprüche 1 bis 3, **dadurch gekennzeichnet, dass** eine oder mehrere Leitschaufeln (21) einen gekrümmten Strömungsleitabschnitt (21b) aufweisen.

5. Filtereinrichtung nach Anspruch 3 und 4, **dadurch gekennzeichnet, dass** die Leitschaufeln (21) mit dem gekrümmten Strömungsleitabschnitt (21b) im Bereich der Schmalseiten des Filtermediumkörpers (7) angeordnet sind.

6. Filtereinrichtung nach einem der Ansprüche 1 bis 5, **dadurch gekennzeichnet, dass** eine oder mehrere Leitschaufeln (21) einen ebenen oder zumindest annähernd ebenen Strömungsleitabschnitt (21c) aufweisen.

7. Filtereinrichtung nach Anspruch 3 und 6, **dadurch gekennzeichnet, dass** die Leitschaufeln (21) mit dem ebenen oder zumindest annähernd ebenen Strömungsleitabschnitt (21c) im Bereich der Längsseiten des Filtermediumkörpers (7) angeordnet sind.

8. Filtereinrichtung nach einem der Ansprüche 1 bis 7, **dadurch gekennzeichnet, dass** der Strömungsleitabschnitt (21b, 21c) einer Leitschaufel (21) sich an einen Befestigungsabschnitt (21a) der Leitschaufel (21) anschließt, über den die Leitschaufel (21) am Filterelement (2) befestigt ist, wobei der Strömungsleitabschnitt (21b, 21c) und der Befestigungsabschnitt (21a) einen Winkel zwischen 10° und 80° einschließen.

9. Filtereinrichtung nach einem der Ansprüche 1 bis 8, **dadurch gekennzeichnet, dass** die Leitschaufeln (21) axial - bezogen auf die Längsachse des Filterelements (2) - sich bis zur Anströmseite des Filtermediumkörpers (7) erstrecken.

10. Filtereinrichtung nach einem der vorhergehenden Ansprüche, **dadurch gekennzeichnet, dass** die Leitschaufeln (21) des Filterelements (2) in einem Strömungsdurchgang (20) zwischen einer Stirnseite des Filterelements (2) und der Innenseite der Außenwand des Filtergehäuses (3) angeordnet sind.

## Claims

1. Filtering device for filtering the combustion air to be supplied to an internal combustion engine, having a filter housing (3) and having a filter element (2) accommodated by the filter housing (3), the filter element having an annular filter medium body (7) and having a closed end disc (9) on a front face of the filter medium body (7), wherein a plurality of guide vanes (21), which extend radially beyond the outer contour of the closed end disc (9) and project into a flow path (20) located upstream of the inflow side of the filter medium body (7), are disposed on the filter element (2) adjacent to the closed end disc (9), wherein the guide vanes (21) are held on the closed end disc (9), **characterized in that** the guide vanes lie axially at least approximately at the same height as the closed end disc, and a flow-tight separating element (27), which extends on the inflow side across a partial surface of the filter medium body (7), is disposed on or adjacent to the filter medium body (7) of the filter element (2), wherein both a separating element (27) in the shape of a housing-sided calming wall and a further separating element in the shape of a filter element-sided separating foil (27a) extending in the axial direction from the closed end disc (9) are provided, and these two separating elements (27, 27a) being located on axially opposite sides of the filter medium body (7) of the filter element (2).

2. Filtering device according to claim 1, **characterized in that** the guide vanes (21) are regularly distributed across the periphery of the end disc (9).

3. Filtering device according to claim 1 or 2, **characterized in that** the annular filter medium body (7) of the filter element (2) features an elongated crosssectional shape.

4. Filtering device according to one of the claims 1 to 3, **characterized in that** one or a plurality of guide vanes (21) feature a curved flow guiding section (21b).

5. Filtering device according to claim 3 and 4, **characterized in that** the guide vanes (21) with the curved flow guiding section (21b) are disposed in the area of the narrow sides of the filter medium body (7).

6. Filtering device according to one of the claims 1 to 5, **characterized in that** one or a plurality of guide vanes (21) feature a plane or at least approximately plane flow guiding section (21c).

7. Filtering device according to claim 3 and 6, **characterized in that** the guide vanes (21) with the plane or at least approximately plane flow guiding section (21c) are disposed in the area of the longitudinal sides of the filter medium body (7).

8. Filtering device according to one of the claims 1 to 7, **characterized in that** the flow guiding section (21b, 21c) of a guide vane (21) adjoins an attachment portion (21a) of the guide vane (21) via which the guide vane (21) is attached to the filter element (2), wherein the flow guiding section (21b, 21c) and the attachment portion (21a) enclose an angle between 10° and 80°.

9. Filtering device according to one of the claims 1 to 8, **characterized in that** the guide vanes (21) extend axially - with regard to the longitudinal axis of the filter element (2) - up to the inflow side of the filter medium body (7).

10. Filtering device according to one of the preceding claims, **characterized in that** the guide vanes (21) of the filter element (2) are disposed in a flow passage (20) between a front face of the filter element (2) and the interior side of the outer wall of the filter housing (3).

## Revendications

1. Dispositif de filtration pour filtrer l'air de combustion à acheminer à un moteur à combustion interne, avec un boîtier de filtre (3) et avec un élément filtrant (2) logé dans le boîtier de filtre (3), l'élément filtrant ayant un corps de milieu filtrant (7) annulaire et ayant un disque d'extrémité (9) fermé sur une face frontale du corps de milieu filtrant (7), plusieurs aubes directrices (21) s'étendant en sens radial au-delà du contour du disque d'extrémité (9) fermé et pénétrant dans un trajet d'écoulement (20) situé en amont du côté d'entrée du corps de milieu filtrant (7) étant disposées sur l'élément filtrant (2), à proximité du disque d'extrémité (9) fermé, les aubes directrices (21) étant fixées sur le disque d'extrémité (9) fermé, **caractérisé en ce que** les aubes directrices sont positionnées en sens axial au moins à peu près à la même hauteur que le disque d'extrémité fermé et qu'un élément de séparation (27) étanche au flux s'étendant du côté d'entrée au-dessus d'une surface partielle du corps de milieu filtrant (7) est disposé sur le, ou à proximité du corps de milieu filtrant (7) de l'élément filtrant (2), aussi bien un élément de séparation (27) sous forme de paroi de stabilisation situé du côté du boîtier qu'un autre élément de séparation sous forme de film de séparation (27a) situé du côté de l'élément filtrant et s'étendant en sens axial à partir du disque d'extrémité (9) fermé étant prévus et ces deux éléments de séparation (27, 27a) se trouvant des côtés opposés en sens axial au corps de milieu filtrant (7) de l'élément filtrant (2).

2. Dispositif de filtration selon la revendication 1, **caractérisé en ce que** les aubes directrices (21) sont réparties uniformément sur le pourtour du disque d'extrémité (9).

3. Dispositif de filtration selon la revendication 1 ou 2, **caractérisé en ce que** le corps de milieu filtrant (7) annulaire de l'élément filtrant (2) présente une section transversale allongée.

4. Dispositif de filtration selon l'une quelconque des revendications 1 à 3, **caractérisé en ce qu'une** ou une pluralité d'aubes directrices (21) présentent une section de guidage du flux (21b) coudée.

5. Dispositif de filtration selon les revendications 3 et 4, **caractérisé en ce que** les aubes directrices (21) avec la section de guidage du flux (21b) coudée sont positionnées dans la zone des côtés étroits du corps de milieu filtrant (7).

6. Dispositif de filtration selon l'une quelconque des revendications 1 à 5, **caractérisé en ce qu'une** ou une pluralité d'aubes directrices (21) présentent une section de guidage du flux (21c) plane ou au moins presque plane.

7. Dispositif de filtration selon les revendications 3 et 6, **caractérisé en ce que** les aubes directrices (21) avec la section de guidage du flux (21c) plane ou au moins presque plane sont disposées dans la zone des côtés longitudinaux du corps de milieu filtrant (7).

8. Dispositif de filtration selon l'une quelconque des revendications 1 à 7, **caractérisé en ce que** la section de guidage du flux (21b, 21c) d'une aube directrice (21) rejoint une section de fixation (21a) de l'aube directrice (21) au moyen de laquelle l'aube directrice (21) est fixée à l'élément filtrant (2), la section de guidage du flux (21b, 21c) et la section de fixation (21a) formant un angle compris entre 10° et 80°.

9. Dispositif de filtration selon l'une quelconque des revendications 1 à 8, **caractérisé en ce que** les aubes directrices (21) s'étendent en sens axial, par rapport à l'axe longitudinal de l'élément filtrant (2), jusqu'au côté amont du corps de milieu filtrant (7).

10. Dispositif de filtration selon l'une quelconque des revendications précédentes, **caractérisé en ce que** les aubes directrices (21) de l'élément filtrant (2) sont disposées dans un passage d'écoulement (20) entre une face frontale de l'élément filtrant (2) et la face intérieure de la paroi extérieure du boîtier de filtre (3).
